# EUROPEAN PATENT APPLICATION

(11) **EP 1 722 195 A1**
(43) Date of publication of application: **15.11.2006**
(21) Application number: 05300369.5
(22) Date of filing: 12.05.2005
(51) Int. Cl.: G01C 21/00, H04L 12/28, H04L 12/56, H04L 29/08

(54) **Crises information and localization system**

(71) Applicant: ALCATEL, 75008 Paris (FR)
(72) Inventor: Kopp, Dieter, D-70430, Stuttgart (DE); Geiger, Martin, D-70430, Stuttgart (DE)
(74) Representative: Rausch, Gabriele

(57) **Abstract**

A method for retrieving a scenario description of a local environment (E1, E2, E3) for a local crisis information system invoking at least a set of reachable/accessible, available sensors (S) via a local communication infrastructure for retrieving local measurements and integrating these measurements to a local scenario description, further invoking at least a set of reachable/accessible, available further crisis information systems (CIS1, CIS2, CIS3) for retrieving a further local scenario description and integrating the further local scenario description with the local scenario description in order to derive the scenario description. And a crisis information system device (CIS1, CIS2, CIS3), especially a hand-held or wearable, comprising a network interface and means for establishing a wireless ad hoc local communication infrastructure, therfor.

## Description

The invention relates to a method for retrieving a scenario description of a local environment for a local crisis information system. The invention also relates to a device and a computer software product therefor.

Distributed sensor networks domain represents an evolving frontier in technology that pushes information fusion beyond the realms of data aggregation and association. Information fusion plays a role in the integration of smart sensors and actuators, devices and capabilities, real and simulated sensor nodes, as well as different abstraction layers. It also assists in the development of sensor network application with sensor nodes, distributed & collaborative algorithms, software and hardware agents, all of which contribute to facilitate information networking in a timely manner.

The survey "Sensor Networks: An Overview" of Archana Bharathidasan and Vijay Anand Sai Ponduru, Department of Computer Science University of California Davis, CA 95616, describes sensor networks as dense wireless networks of sensors, which collect and disseminate environmental data. Wireless sensor networks facilitate monitoring and controlling of physical environments from remote locations with better accuracy. They have applications in a variety of fields such as environmental monitoring, military purposes and gathering sensing information in inhospitable locations.

Such an application is guidance and information under crisis situation for rescue, safety and security, e.g. under exceptional circumstances like fire or smoke, etc. Such an application is suited especially for trains, tunnels (train, cars, etc.), station (metro, main line), ships, buildings, etc.

Under crisis situation a set of people (group), sometimes also group members have to act individually and separately. Information about the (environmental) condition / situation is essential in such scenarios. Members might be separated by walls, doors, etc. although the independent acting members could exchange essential information to save life.

Current crisis management systems share central service architecture. Exemplary the GMES information system architecture has several technological aspects like a service oriented view of a grid and their implementation using web services technologies an d knowledge technologies. A sub-component AKoGriMo will expand the potential of the grid through integration with a mobile network architecture built with commercial exploitation in mind. This integration will result in novel, nomadic- and mobility-aware user-friendly services and applications that, for instance, possibly exploit information about the user's current location. AKoGriMo will deliver a model and a blueprint of a NGG infrastructure with the following innovative aspects: Nomadism and Mobility on top of a Next Generation Mobile Network Layer will facilitate widespread exploitation through functionality such as data integrity, role based security, user profiles and support for accounting. Personalized, context-aware access will facilitate user interaction and human collaboration.

The known sensor networks as applicable for autonomous robots or the known crisis management systems rely on a central coordination as well as on a intact communication infrastructure. But communication with a central control element is often impossible. The invention describes the technical alternative to overcome these various problems.

The invention is a method for retrieving a scenario description of a local environment for a local crisis information system invoking at least a set of reachable/accessible, available sensors via a local communication infrastructure for retrieving local measurements and integrating these measurements to a local scenario description, and further invoking at least a set of reachable/accessible, available further crisis information systems for retrieving a further local scenario description and integrating the further local scenario description with the local scenario description in order to derive the scenario description.

The invention is a device, especially a hand-held or wearable, comprising a network interface and means for establishing a wireless ad hoc local communication infrastructure, the device further comprises an application adapted to retrieve a scenario description of a local environment for a local crisis information system invoking at least a set of reachable/accessible, available sensors via the local communication infrastructure for retrieving local measurements/information and integrating these measurements to a local scenario description, where the application is further adapted to further invoke at least a set of reachable, available further devices for retrieving a further local scenario description and integrating the further local scenario description with the local scenario description in order to derive the scenario description.

In other words a device is suggested to establish an ad hoc communication infrastructure for exchanging local environment observations, e.g.. forwarding raw sensor data and already into an environment presentation integrated fused sensor data, with neighboring devices. Neighboring means on the one side reachable/accessible through the communication infrastructure and on the other side the fusing of whole neighboring, possibly overlapping environment presentation.

This has the advantage of enhanced fault tolerance location information. Furthermore is the concept applicable for active sensors. The term sensor here subsumes detectors like cameras, IR-sensors, motion detectors, etc. providing any kind of condition and situation information. Data is assumed to be exchanged wireless using e.g. WIFI, Bluetooth, etc. to the accessible terminals or to a control center. Preferably the ad-hoc communication system itself comprises a built in fault tolerance like the TErrestrial Trunked RAdio (TETRA) network), or alternative radio connections including for instance repeater-functionality.

The reliability of the scenario description is enhanced further integrating of actual condition parameters like fire, smoke, temperature, gas, motions, etc. and a rating of the information.

Preferably and advantageously the scenario description is rendered for a 2D/3D guidance map including all the dangerous and life saving information.

In crisis/emergency situation all available location, condition and situation information have to be combined to guide the Rescue, Safety, Fire fighter and Security people. Unfortunately, are under bad conditions, communication infrastructure elements often destroyed (through the emergency or by terrorists). The goal is to use the remaining elements, like a stone in a puzzle, and generate the essential information.

RFID elements are well known to give a location information, mounted in walls, at doors, etc. missing or damaged RFID will have minor influence.

Active sensors, with any kind of RF interface (e.g. Bluetooth, Wifi) will give additional location information (position, doors, windows...), location condition (smoke, fire, gas, temperature, etc.) and location situation (motions, available persons, explosive material...)

Ad-hoc network, e.g. based on e.g. TETRA working in communication and repeater function will distribute the available information trough the group and if accessible also to the control centre.

Collection and rating of the information will be done either by the individual terminals and/or, in case the control centers available/accessible in relation with them.

The invention is described in the following description of examples in conjunction with the drawing figures, in which:

Fig. 1 shows a set of sensors and a set of devices according to the invention

Fig. 2 shows an ad hoc network of communicating devices according to the invention

Fig. 3 shows a set of sensors and the devices according the invention in a crisis situation, for example in different floors of a ship.

Peer-to-peer (P2P) technology facilitates communication and resource utilization within a computer network. P2P describes the general model of using direct communication between all devices on the network. P2P brings connectivity to the edge of the network, enabling any connected device on the network to communicate and collaborate. With P2P, applications can be more collaborative and communication-focused, and information can be more timely and accurate.

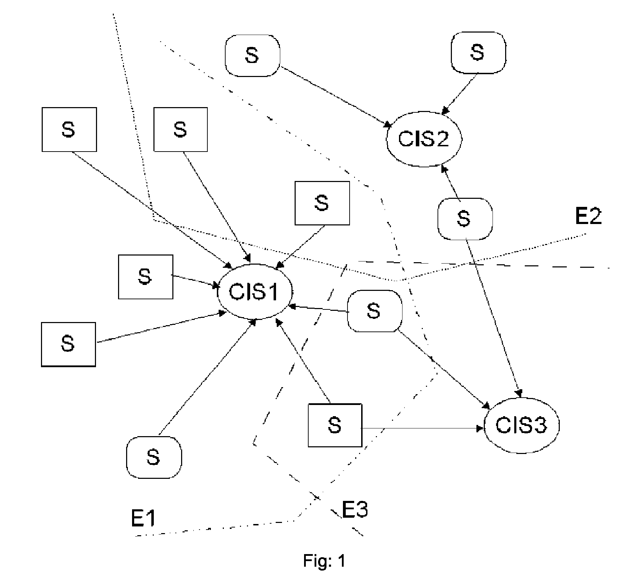

Such a network is shown in Fig 1. The network comprises sensors S, exemplary two kind of sensors e.g. active sensors providing measurements and passive sensors providing e.g. location information or identification coded like RFID tags. The network also comprises devices CIS1, CIS 2, and CIS 3, especially devices like hand-helds or wearables, suited for crisis scenarios. The arrows from the sensors S to the devices CIS1, CIS 2, and CIS 3 illustrate the information flow between these entities. Each sensor S has a certain view of a scene, e.g. the temperature, a video perspective, a location information etc. Tied together this is presentable as a scenario description, e.g. textual as an alert or visual as a video image, graphical e.g. as a map. Such information could be rendered on a display or generally on an output device - audio might be an alternative - for guiding a person through a crisis scenario.

Each sensor has also a certain scope, which is a local property, meaning coverage e.g. an area that is measured or generally observed. Hence a device CIS1, CIS 2, and CIS 3 could derive a scenario description only for an area A1, A2, or E3 that is covered by a reachable/accessible sensor S. Lets call such scenario description ad hoc.

The individual views could be enhanced when the set of reachable/accessible sensors S, i.e. the amount of information of the environment is larger.

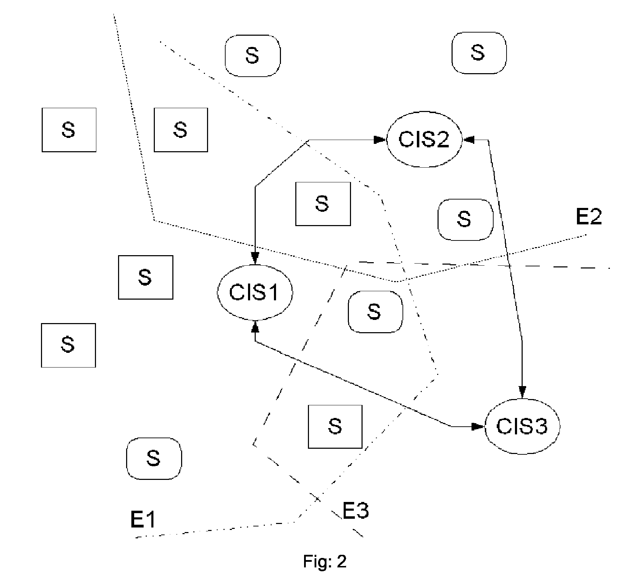

Fig. 2 shows the same network as Fig. 1 with the difference that the devices CIS1, CIS2 and CIS3 communicate their scenario descriptions of the respective covered area E1, E2, and E3. For the communication a P2P platform is assumed like the one described in "JXTA Technology, Creating Connected Communities", Jan. 2004.

The devices CIS1, CIS2 and CIS3 could exchange information about their scope of the whole scenario, e.g. by exchanging their scenario descriptions or by providing services that allow to inference about the scenario.

Preferably the exchanged description share a common geometry for presentation in order to align the information about the covered areas E1, E2 and E3 or at least to provide a means for identifying the same observations from different devices, e.g. observations that are made in an overlap of two coverage. Advantageously a shared structure is established carrying - distributed on the devices - the information about the whole scenario, e.g. each device provides a view and shares its view with the other devices in an ad hoc manner based on a shared information structure as it is proposed originally by the P2P approach.

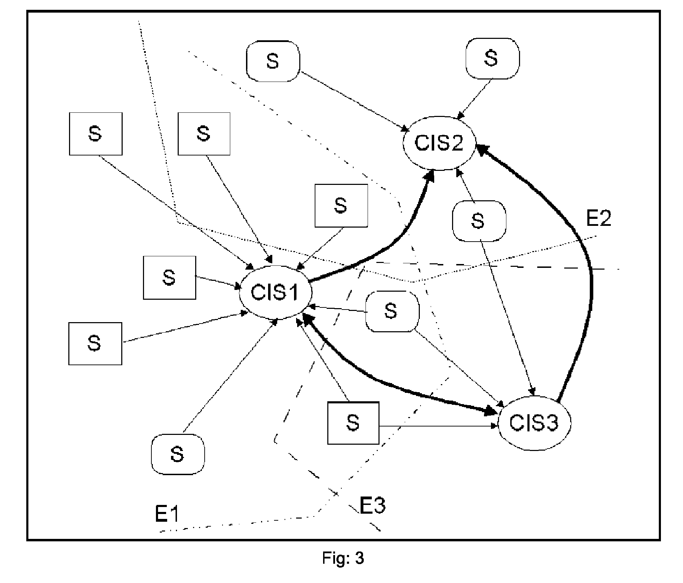

Fig. 3 shows a set of sensors and the devices according the invention in a crisis situation, for example in different floors of a ship. In area E2 is the crisis situation, the group CIS2 has due to the disaster no contact and almost no information from most of the sensors on area E2. The group CIS1 on area E1, the corridor below has access to some of the E2 sensors, the same condition is given for CIS3, corridor above. CIS1 to CIS3 are building an ad-hoc network to exchange the sensor information with CIS2. On each terminal the information map plus condition and security will be generated based on the common colleted data.

The widespread acceptance of first-generation peer-to-peer applications has brought distributed computing into the limelight - and suggests that the Internet is at the next inflection point in its growth. The overnight adoption of peer-to-peer file sharing Software is testimony to the power of this model to expand access to resources, enhance the rich-ness and depth of content, and propel the growth of the Web.

Peer-to-peer computing is generating excitement because it offers an intuitive model for the most fundamental Inter-net activities: *Searching and sharing.* Although today's applications are primarily used for finding, retrieving, and using media files, they hint at what complete access to the Web can deliver in the future: Resources - including information and processing power - can be shared directly from those who have them to those who need them. Documents can be managed and encrypted so that they are anonymous, likely to exist somewhere in the network at all times, and more secure. Peer-to-peer searches are distributed, parallel, and asynchronous, enabling 'deep' searches of Internet content that quickly yields up-to-the-minute results. Today's look-ups conducted by Internet search engines are limited by the months it takes their crawlers to traverse the sites that they index. In contrast, peer-to peer search results are more relevant, and can be more focused.

The abstract geometry of observed objects could be presented for instance using object relation maps as described in "Relational Object Maps for Mobile Robots" of Benson Limketkai, Lin Lao, and Dieter Fox.

Guidance map generation, here a position map will be generated including available status, condition as features. Each terminal preferably renders such a map of available location, where any position information will be used to define as accurate as possible the position. Active sensor information (through direct or network access) enhances the map with condition/situation information (e.g. in that corridor is fire, behind that wall is a person detected, that door is extreme heated, behind the door is an oil tank, etc.). Also the position of other group members will be integrated. For example a fire fighter knows that on the other side of the wall is a heavy fire, to reach it the best way is also shown. The fire fighter will also be informed of their colleges' position to coordinate the common procedure.

Presentation on mobile terminals will be done, maybe with special presentation form like HMDs (Head mounted displays), etc.

## Claims

1. A method for retrieving a scenario description of a local environment (E1, E2, E3) for a local crisis information system invoking at least a set of reachable/accessible, available sensors (S) via a local communication infrastructure for retrieving local measurements/information and integrating these measurements to a local scenario description, **characterized by** further invoking at least a set of reachable/accessible, available further crisis information systems (CIS1, CIS2, CIS3) for retrieving a further local scenario description and integrating the further local scenario description with the local scenario description in order to derive the scenario description.

2. The method according to claim 1, **characterized in that** the local scenario description and the further local scenario description are relational object maps.

3. The method according to claim 1, **characterized in that** the sensors comprises a device having wireless data communication capability for identifying radio frequency identification tags which are distributed throughout the environment, such that the device can identify those units with which they are communicating.

4. A crisis information system device (CIS1, CIS2, CIS3), especially a hand-held or wearable, comprising a network interface and means for establishing a wireless ad hoc local communication infrastructure, the device further comprises an application adapted to retrieve a scenario description of a local environment (E1, E2, E3) for a local crisis information system (CIS1, CIS2, CIS3) invoking at least a set of reachable/accessible, available sensors (S) via the local communication infrastructure for retrieving local measurements and integrating these measurements to a local scenario description, **characterized in that** the application is further adapted to further invoke at least a set of reachable/accessible, available further devices for retrieving a further local scenario description and integrating the further local scenario description with the local scenario description in order to derive the scenario description.

5. A computer software product, **characterized by** comprising programming means for carrying out the method according to claim 1.
